# Europäisches Patentamt
## European Patent Office
## Office européen des brevets

(19)

(11) Veröffentlichungsnummer : **0 159 398**
**B1**

(12)
# EUROPÄISCHE PATENTSCHRIFT

(45) Veröffentlichungstag der Patentschrift :
**19.07.89**

(51) Int. Cl.⁴ : **B 32 B 27/30, C 08 L 73/00**

(21) Anmeldenummer : **84113201.2**

(22) Anmeldetag : **02.11.84**

(54) **Tiefziehfähige Folien und daraus hergestellte Formkörper für Kraftfahrzeuginnenräume.**

(30) Priorität : **18.01.84 DE 3401482**

(43) Veröffentlichungstag der Anmeldung :
**30.10.85 Patentblatt 85/44**

(45) Bekanntmachung des Hinweises auf die Patenterteilung : **19.07.89 Patentblatt 89/29**

(84) Benannte Vertragsstaaten :
**AT BE CH DE FR GB IT LI LU NL SE**

(56) Entgegenhaltungen :
EP—A— 0 099 455
US—A— 3 582 451
US—A— 3 592 877
US—A— 4 123 585
**Die Akte enthält technische Angaben, die nach dem Eingang der Anmeldung eingereicht wurden und die nicht in dieser Patentschrift enthalten sind.**

(73) Patentinhaber : **ALKOR GMBH KUNSTSTOFFE Morgensternstrasse 9 Postfach 71 01 09 D-8000 München 71 (DE)**

(72) Erfinder : **Landler, Josef Schiessstätt-Strasse 84 D-8190 Wolfratshausen (DE)**

(74) Vertreter : **Seiler, Siegfried c/o DEUTSCHE SOLVAY-WERKE GmbH Langhansstrasse 6 Postfach 11 02 70 D-5650 Solingen 11 (DE)**

EP 0 159 398 B1

Jouve, 18, rue St-Denis, 75001 Paris, France

**Beschreibung**

Die Erfindung gemäß EP-A-0 099 455 betrifft Folien, insbesondere tiefziehfähige Folien, die gegebenenfalls auf einer Seite hinterschäumt sind, für Kraftfahrzeuginnenräume und daraus hergestellte Formkörper oder Formkörperteile für den Kraftfahrzeuginnenraum, bestehend aus tiefziehfähigen, ungeschäumten Verbundfolien mit einer Dicke von 500 μm-1.400 μm, vorzugsweise 600 μm-1.200 μm, die laminiert und in Form von Zwei- oder Mehrfachschichten aufgebaut sind, bestehend aus einer oder mehreren weichmacherfreien oder weichmacherarmen Unterfolien aus Mischungen von Polyvinylchlorid (PVC), Acrylnitril-Butadien-Copolymerisaten (ABS) sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder Mischungen von Polyvinylchlorid (PVC) und Acrylnitril-Butadien-Copolymerisaten (ABS) mit einem PVC-ABS-Gehalt von mehr als 40 Gew.-%, vorzugsweise mehr als 50 Gew.-% (bezogen auf 100 Gew.-Teile der Kunstharzmischung für die Unterfolie), mit einem anderen Kunstharz, vorzugsweise einem Acrylnitril-Copolymerisat oder einem Kunstharzgemisch auf der Basis von Acrylnitril-Copolymerisat, sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist, und einer weichmacherfreien oder weichmacherarmen Oberfolie mit einer Dicke von 100-500 μm, vorzugsweise 120-200 μm, aus Polyvinylchlorid sowie einem Plastifiziermittel auf der Basis eines plastifizierenden Hochpolymeren mit polaren Gruppen, das ein Molekulargewicht von grösser als 10.000, vorzugsweise größer als 30.000, aufweist und mit Polyvinylchlorid eine Phase bildet oder mit Polyvinylchlorid verträglich ist, oder Mischungen von Polyvinylchlorid mit einem anderen Kunstharz, vorzugsweise einem Acrylnitril-Copolymerisat oder einem Kunstharzgemisch auf der Basis von Acrylnitril-Copolymerisat sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid verträglich ist oder eine Phase bildet. Vorzugsweise werden in EP-A-0 099 455 als derartige Plastifiziermittel Ethylen-Vinylacetat-Copolymerisat, olefinisches Terpolymerisat mit statistisch verteilten Acetat- und Kohlenmonoxidgruppen und Polycaprolacton genannt.

Aus US-A-35 82 451 sind kaltverformbare und hitzebeständige Verbundstrukturen aus Kunststoff und Metall bekannt. Sie sind dreischichtig aufgebaut und bestehen aus einer ersten Schicht aus Polyvinylchlorid/Styrolpfropfcopolymerisat, einer zweiten Schicht aus Metall, beispielsweise perforierte Metallfolie oder Metalldrahtgewebe und einer dritten Schicht aus Polyvinylchlorid/Styrolpfropfcopolymerisat und einem oder mehreren Weichmachern.

Ausgehend von der Zielsetzung des vorstehend skizzierten EP-A-0 099 455 besteht die Aufgabe der vorliegenden Erfindung darin, die Folien dahingehend zu verbessern, daß sie zusätzlich im tiefgezogenen Zustande spannungsarm sind, in pigmentierter Form eine gleichmäßige Mattstufenverteilung sowie geringe Vergrauung aufweisen und im geprägten bzw. genarbten Zustande kein Verzug der Präge- bzw. Narbenstruktur erfolgt. Weiterhin sollten die fog-Werte dieser Folien niedrig sein.

Diese Aufgabe wird erfindungsgemäß dadurch gelöst, daß das Plastifiziermittel in den Folien aus einer Mischung von Ethylen-Vinylacetat-Copolymerisat mit polaren Gruppen (EVA), olefinischem Terpolymerisat mit statistisch verteilten Acetat- und Kohlenmonoxidgruppen oder Polycaprolacton mit polaren Gruppen (PCL) als plastifizierende Hochpolymere mit polaren Gruppen, die ein Molekulargewicht von größer als 10.000, vorzugsweise größer als 30.000, aufweisen und mit Polyvinylchlorid verträglich sind oder eine Phase bilden, mit mindestens einem aromatischen Polycarbonsäureester, vorzugsweise Trimellithsäureester, im Verhältnis aromatischer Polycarbonsäureester zu plastifizierendes Hochpolymere von 8 : 2 bis 0,1 : 10, vorzugsweise von 3 : 2 bis 2 : 3, besteht.

Der Gehalt des Plastifiziermittels in den Folien beträgt dabei 10-40 Gew.-%, vorzugsweise 15-35 Gew.-%. Hinsichtlich der Art der zur Mischung mit dem aromatischen Polycarbonsäureester, vorzugsweise Trimellithsäureester, verwendeten plastifizierenden Hochpolymere mit polaren Gruppen und einem Molekulargewicht von größer als 10.000 wird auf die Angaben in der EP-A-0 099 455 verwiesen.

Nach einer vorteilhaften Ausführungsform der Erfindung besteht das Acrylnitril-Copolymerisat in den Folien aus einem Acrylnitril-Acrylatharz (NAR). Hierdurch werden Folien mit weiter verbesserten UV- und Alterungsbeständigkeit erhalten.

Gemäß einer bevorzugten Ausführungsform besteht die Oberfolie aus einer Mischung von Polyvinylchlorid (PVC), Acrylnitril-Butadien-Styrol-Copolymerisat (ABS) und/oder Styrol-Acrylnitril-Copolymerisat (SAN), Acrylnitril-Butadienharz (NBR) und dem Plastifiziermittel und die Unterfolie bzw. die Unterfolien aus Polyvinylchlorid (PVC), Acrylnitril-Butadien-Styrol-Copolymerisat (ABS), Styrol-Acrylnitril-Copolymerisat (SAN), Acrylnitril-Butadienharz (NBR) und dem Plastifiziermittel.

Nach einer weiteren bevorzugten Ausführungsform besteht die Oberfolie aus einer Mischung von Polyvinylchlorid (PVC), Acrylnitril-Butadien-Styrol-Copolymerisat (ABS) und/oder Styrol-Acrylnitril-Copolymerisat (SAN), Acrylnitril-Acrylatharz (NAR) und dem Plastifiziermittel und die Unterfolie bzw. die Unterfolien aus Polyvinylchlorid (PVC), Acrylnitril-Butadien-Styrol-Copolymerisat (ABS), Styrol-Acrylnitril-Copolymerisat (SAN), Acrylnitril-Acrylatharz (NAR) und dem Plastifiziermittel.

Die erfindungsgemäßen Folien weisen nach einer Ausführungsform eine Shore-D-Härte von 20-65, vorteilhaft eine solche von 21-40 auf.

Die Plastifiziermittel enthaltenden Kunststoffmischungen der Ober- und/oder Unterfolien werden, wie in EP-A-0 099 455 beschrieben, in einem Extruder oder in anderen, an sich bekannten Plastifiziervorrichtungen zusammen mit den Verarbeitungshilfsmitteln sowie ggf. Füllstoffen, Pigmenten oder Mitteln zum Schwerentflammbarmachen vermischt, erhitzt und plastifiziert sowie unter Bildung einer oder mehrerer Folien bzw. Schichten in einem Kalandrier-, Kaschier- und/oder Coextrusionsverfahren vereinigt. Nach einer Ausführungsform können sie auch unmittelbar als Monofolie extrudiert werden. Nachfolgend kann eine Prägung unter Verwendung einer an sich bekannten Prägevorrichtung und/oder ein Tiefziehen, beispielsweise in einer Tiefziehform, erfolgen.

Beispiele für die Zusammensetzung einer Verbundfolie aus Oberfolie und Unterfolie(n) gleicher Zusammensetzung :

| 1. Beispiel | Gew.-Teile |
|---|---|
| Suspensionspolyvinylchlorid (PVC) K-Wert 70 | 45 |
| Acrylnitril-Butadien-Styrol-Copolymerisat (ABS) | 25 |
| Styrol-Acrylnitril-Copolymerisat (SAN) | 5 |
| Acrylnitril-Acrylatharz (NAR) | 7,5 |
| Ethylen-Vinylacetat-Copolymerisat mit polaren Gruppen (EVA) | 7,5 |
| Aromatischer Polycarbonsäureester | 10 |
| | 100 |
| Stabilisatoren | 2,0 |
| Antioxydant und/oder Gleitmittel | 2,3 |

| Prüfmethode: | Dimension: | Prüfwerte: |
|---|---|---|
| Zugfestigkeit DIN 53455 Geschwindigkeit 100 mm/min | $N/mm^2$ | längs x = 23,0  s = 2,4 <br> quer x = 21,9  s = 1,3 |
| Bruchdehnung DIN 53455 Geschwindigkeit 100 mm/min | Prozent | längs x = 192  s = 19 <br> quer x = 202  s = 23 |
| Vicat DIN 53460 | °C <br> 1.000 $\mu$m | 80 |
| Härte DIN 53505 | D-Shore | 58 |

| 2. Beispiel | Gew.-Teile |
|---|---|
| Suspensionspolyvinylchlorid (PVC) K-Wert 70 | 28,0 |
| Acrylnitril-Butadien-Styrol-Copolymerisat (ABS) | 32 |
| Acrylnitril-Acrylatharz (NAR) | 15,0 |
| Ethylen-Vinylacetat-Copolymerisat mit polaren Gruppen (EVA) | 11,0 |
| Aromatischer Polycarbonsäureester | 14,0 |
| | 100,0 |

Stabilisatoren                                                                                    2,0
Gleitmittel und/oder Antioxydantien                                                              2,6

Prüfmethode:            Dimension:                      Prüfwerte:

Zugfestigkeit           N/mm$^2$     längs $\overline{x}$ = 16,8   s = 1,9

DIN 53455 Ge-                        quer $\overline{x}$ = 15,5    s = 2,1

schwindigkeit

100 mm/min

Bruchdehnung            Prozent      längs $\overline{x}$ = 189    s = 21

DIN 53455                            quer $\overline{x}$ = 201     s = 13

Vicat DIN 53 460        °C                                         66

1.000 µm

Härte DIN 53505 D-Shore                                                                           38

### 3. Beispiel                                                                         Gew.-Teile

Suspensionspolyvinylchlorid (PVC) K-Wert 70                                                    25,25
Acrylnitril-Butadien-Styrol-Copolymerisat (ABS)                                               25,25
Styrol-Acrylnitril-Copolymerisat (SAN)                                                        12,50
Acrylnitril-Acrylatharz (NAR)                                                                  5,00
Olefinisches Terpolymerisat mit statistisch verteilten Acetat- und Kohlenmonoxidgruppen          24
Aromatischer Polycarbonsäureester                                                                 8
                                                                                        _____
                                                                                             100,00

Stabilisatoren                                                                                    2,2
Gleitmittel und/oder Antioxydantien                                                              2,5

Prüfmethode:            Dimension:                      Prüfwerte:

Zugfestigkeit           N/mm$^2$     längs $\overline{x}$ = 11,6   s = 0,2

DIN 53455 Ge-                        quer $\overline{x}$ = 11,0    s = 0,3

schwindigkeit

100 mm/min

Bruchdehnung            Prozent      längs $\overline{x}$ = 180    s = 20

DIN 53455 Ge-                        quer $\overline{x}$ = 194     s = 28

schwindigkeit

100 mm/min

Vicat DIN 53460         °C                                         62

1.000 µm

Härte DIN 53 505        D-Shore                                    36

4

**Patentansprüche**

1. Folien, insbesondere tiefziehfähige Folien, für Kraftfahrzeuginnenräume und daraus hergestellte Formkörper oder Formkörperteile für den Kraftfahrzeuginnenraum, bestehend aus tiefziehfähigen, ungeschäumten Verbundfolien mit einer Dicke von 500 µm — 1.400 µm, vorzugsweise 600 µm-1.200 µm, die laminiert und in Form von Zwei — oder Mehrfachschichten aufgebaut sind, bestehend aus einer oder mehreren weichmacherfreien oder weichmacherarmen Unterfolien aus Mischungen von Polyvinylchlorid (PVC), Acrylnitril-Butadien-Copolymerisaten (ABS) sowie einem Plastifiziermittel auf der Basis eines plastifizierenden Hochpolymeren mit polaren Gruppen, das ein Molekulargewicht von größer als 10.000, vorzugsweise größer als 30.000, aufweist und mit Polyvinylchlorid verträglich ist oder eine Phase bildet oder Mischungen von Polyvinylchlorid (PVC) und Acrylnitril-Butadien-Copolymerisaten (ABS) mit einem PVC-ABS-Gehalt von mehr als 40 Gew.-%, vorzugsweise mehr als 50 Gew.-% (bezogen auf 100 Gew.-Teile der Kunstharzmischung für die Unterfolie) mit einem anderen Kunstharz, vorzugsweise einem Acrylnitril-Copolymerisat oder einem Kunstharzgemisch auf der Basis von Acrylnitril-Copolymerisat, sowie einem Plastifiziermittel auf der Basis eines plastifizierenden Hochpolymeren mit polaren Gruppen, das ein Molekulargewicht von grösser als 10.000, vorzugsweise größer als 30.000, aufweist und mit Polyvinylchlorid verträglich ist oder eine Phase bildet, und einer weichmacherfreien oder weichmacherarmen Oberfolie mit einer Dicke von 100-500 µm, vorzugsweise 120-200 µm, aus Polyvinylchlorid sowie einem Plastifiziermittel auf der Basis eines plastifizierenden Hochpolymeren mit polaren Gruppen, das ein Molekulargewicht von grösser als 10.000, vorzugsweise größer als 30.000, aufweist und mit Polyvinylchlorid verträglich ist oder eine Phase bildet, oder Mischungen von Polyvinylchlorid mit einem anderen Kunstharz, vorzugsweise einem Acrylnitril-Copolymerisat oder einem Kunstharzgemisch auf der Basis von Acrylnitril-Copolymerisat sowie einem Plastifiziermittel auf der Basis eines plastifizierenden Hochpolymeren mit polaren Gruppen, das ein Molekulargewicht von grösser als 10.000, vorzugsweise größer als 30.000, aufweist und mit Polyvinylchlorid verträglich ist oder eine Phase bildet, wobei Ethylen-Vinylacetat-Copolymerisat mit polaren Gruppen (EVA) und einem Vinylacetatgehalt von 60-80 Gew.-%, olefinischem Terpolymerisat mit statistisch verteilten Acetat- und Kohlenmonoxidgruppen oder Polycaprolacton mit polaren Gruppen (PCL) als plastifizierende Hochpolymere mit polaren Gruppen, die ein Molekulargewicht von größer als 10.000, vorzugsweise größer als 30.000, aufweisen und mit Polyvinylchlorid verträglich sind oder eine Phase bilden, eingesetzt ist, dadurch gekennzeichnet, daß das Plastifiziermittel aus einer Mischung des plastifizierenden Hochpolymeren mit mindestens einem aromatischen Polycarbonsäureester, vorzugsweise Trimellithsäureester, im Verhältnis aromatischer Polycarbonsäureester zu plastifizierendes Hochpolymere von 8 : 2 bis 0,1 : 10, vorzugsweise von 3 : 2 bis 2 : 3, besteht.

2. Folien nach Anspruch 1, dadurch gekennzeichnet, daß der Gehalt des Plastifiziermittels in den Folien 10-40 Gew.-%, vorzugsweise 15-35 Gew.-%, beträgt.

3. Folien nach Anspruch 1 und 2, dadurch gekennzeichnet, daß das Acrylnitril-Copolymerisat aus Acrylnitril-Acrylatharz (NAR) besteht.

4. Folien nach Anspruch 1 und 2, dadurch gekennzeichnet, daß die Oberfolie aus einer Mischung von Polyvinylchlorid (PVC), Acrylnitril-Butadien-Styrol-Copolymerisat (ABS) und/oder Styrol-Acrylnitril-Copolymerisat (SAN), Acrylnitril-Butadienharz (NBR) und dem Plastifiziermittel und die Unterfolie bzw. die Unterfolien aus Polyvinylchlorid (PVC), Acrylnitril-Butadien-Styrol-Copolymerisat (ABS), Styrol-Acrylnitril-Copolymerisat (SAN), Acrylnitril-Butadienharz (NBR) und dem Plastifiziermittel besteht bzw. bestehen.

5. Folien nach Ansprüchen 1 bis 3, dadurch gekennzeichnet, daß die Oberfolie aus einer Mischung von Polyvinylchlorid (PVC), Acrylnitril-Butadien-Styrol-Copolymerisat (ABS) und/oder Styrol-Acrylnitril-Copolymerisat (SAN), Acrylnitril-Acrylatharz (NAR) und dem Plastifiziermittel und die Unterfolie bzw. die Unterfolien aus Polyvinylchlorid (PVC), Acrylnitril-Butadien-Styrol-Copolymerisat (ABS), Styrol-Acrylnitril-Copolymerisat (SAN), Acrylnitril-Acrylatharz (NAR) und dem Plastifiziermittel besteht bzw. bestehen.

6. Folien nach einem der Ansprüche 1 bis 5, dadurch gekennzeichnet, daß sie eine Shore-D-Härte von 20-65, vorzugsweise von 21-40, aufweisen.

**Claims**

1. Films, in particular deep-drawable films, for the interiors of motor vehicles and shaped bodies or parts of shaped bodies for the interior of motor vehicles produced therefrom, consisting of deep-drawable, non-foamed composite films having a thickness of 500 µm-1,400 µm, preferably 600 µm-1,200 µm, which are laminated and constructed in the form of two layers or multiple layers, consisting of one or more softener-free or low-softener lower films made from mixtures of polyvinyl chloride (PVC), acrylonitrile-butadiene copolymers (ABS) and a plasticiser on the basis of a plasticising high polymer having polar groups which has a molecular weight of more than 10,000, preferably more than 30,000, and is compatible with polyvinyl chloride or forms a phase with polyvinyl chloride, or mixtures of polyvinyl chloride (PVC) and acrylonitrile-butadiene copolymers (ABS) having a PVC-ABS content of more than 40 % weight, preferably more than 50 % weight (relative to 100 parts by weight of the artificial resin mixture for the lower film) with another artificial resin, preferably an acrylonitrile copolymer or an artificial resin mixture on the basis of acrylonitrile copolymer, and also a plasticiser on the basis of a plasticising high polymer having polar groups which has a molecular weight of more than 10,000, preferably more than 30,000, and is compatible with polyvinyl chloride or forms a phase with polyvinyl chloride, and a softener-free or low-softener upper film having a thickness of 100-500 μm, preferably 120-200 μm, made of polyvinyl chloride and a plasticiser on the basis of a plasticising high polymer having polar groups which has a molecular weight of more than 10,000, preferably more than 30,000, and is compatible with polyvinyl chloride or forms a phase with polyvinyl chloride, or mixtures of polyvinyl chloride with another artificial resin, preferably an acrylonitrile copolymer or an artificial resin mixture on the basis of acrylonitrile copolymer and also a plasticiser on the basis of a plasticising high polymer having polar groups which has a molecular weight of more than 10,000, preferably more than 30,000, and is compatible with polyvinyl chloride or forms a phase with polyvinyl chloride, whereby ethylene-vinylacetate copolymer having polar groups (EVA) and a vinylacetate content of 60-80 % weight, olefinic terpolymers with statistically distributed acetate and carbon monoxide groups or polycaprolactone having polar groups (PCL) as plasticising high polymers having polar groups which have a molecular weight of more than 10,000, preferably more than 30,000, and are compatible with polyvinyl chloride or form a phase with polyvinyl chloride, is used, characterised in that the plasticiser consists of a mixture of the plasticising high polymer with at least one aromatic polycarboxylic acid ester, preferably trimellitic acid ester, in the ratio of aromatic polycarboxylic acid ester to plasticising high polymer of 8 : 2 to 0.1 : 10, preferably of 3 : 2 to 2 : 3.

2. Films according to Claim 1, characterised in that the content of the plasticiser in the sheets is 10-40 % weight, preferably 15-35 % weight.

3. Films according to Claims 1 and 2, characterised in that the acrylonitrile copolymer consists of acrylonitrile/acrylate resin (NAR).

4. Films according to Claims 1 and 2, characterised in that the upper film consists of a mixture of polyvinyl chloride (PVC), acrylonitrile-butadiene-styrene copolymer (ABS) and/or styrene-acrylonitrile copolymer (SAN), acrylonitrile-butadiene resin (NBR) and the plasticiser, and the lower film or lower films consists or consist of polyvinyl chloride (PVC), acrylonitrile-butadiene-styrene copolymer (ABS), styrene-acrylonitrile copolymer (SAN), acrylonitrile-butadiene resin (NBR) and the plasticiser.

5. Films according to Claims 1 to 3, characterised in that the upper film consists of a mixture of polyvinyl chloride (PVC), acrylonitrile-butadiene-styrene copolymer (ABS) and/or styrene-acrylonitrile copolymer (SAN), acrylonitrile-acrylate resin (NAR) and the plasticiser, and the lower film or lower films consists or consist of polyvinyl chloride (PVC), acrylonitrile-butadiene-styrene copolymer (ABS), styrene-acrylonitrile copolymer (SAN), acrylonitrile-acrylate resin (NBR) and the plasticiser.

6. Films according to one of Claims 1 to 5, characterised in that they have a Shore-D hardness of 20-65, preferably 21-40.

**Revendications**

1. Films, en particulier des films emboutissables, pour intérieurs de véhicule et corps façonnés ou éléments de corps façonnés pour l'intérieur de véhicules fabriqués à partir de ceux-ci, consistant en films composites emboutissables non transformés en mousse ayant une épaisseur de 500 μm-1 400 μm, de préférence 600 μm-1 200 μm, qui sont stratifiés et constitués de deux ou plusieurs couches consistant en un ou plusieurs films inférieurs exempts de plastifiant ou à faible teneur en plastifiant formés à partir de mélanges de polychlorure de vinyle (PVC), de copolymère nitrile acrylique-butadiène (ABS) ainsi que d'un plastifiant à base d'un haut-polymère plastifiant comportant des groupes polaires qui présente un poids moléculaire supérieur à 10 000, de préférence supérieur à 30 000, et qui est compatible ou forme une phase avec le polychlorure de vinyle ou à partir de mélanges de polychlorure de vinyle (PVC) et de copolymère nitrile acrylique-butadiène (ABS) ayant une teneur en PVC-ABS de plus de 40 % en poids, de préférence de plus de 50 % en poids (par rapport à 100 parties pondérales du mélange de résines synthétiques destiné au film inférieur) avec une autre résine synthétique, de préférence un copolymère de nitrile acrylique ou un mélange de résines synthétiques à base d'un copolymère de nitrile acrylique, ainsi qu'un plastifiant à base d'un haut-polymère plastifiant comportant des groupes polaires qui présente un poids moléculaire supérieur à 10 000, de préférence supérieur à 30 000, et qui est compatible ou forme une phase avec le polychlorure de vinyle, et en un film supérieur exempt de plastifiant ou à faible teneur en plastifiant ayant une épaisseur de 100-500 μm, de préférence 120-200 μm, en polychlorure de vinyle ainsi qu'en un plastifiant à base d'un haut-polymère plastifiant comportant des groupes polaires qui présente un poids moléculaire supérieur à 10 000, de préférence supérieur à 30 000, et qui est compatible ou forme une phase avec le polychlorure de vinyle, ou en mélanges de polychlorure de vinyle avec une autre résine synthétique, de préférence un copolymère de nitrile acrylique ou un mélange de résines synthétiques à base de copolymère de nitrile acrylique ainsi qu'un plastifiant à base d'un haut-polymère plastifiant comportant des groupes polaires qui présente un poids moléculaire supérieur à 10 000, de préférence supérieur à 30 000, et qui est comparable ou forme une phase avec le polychlorure de vinyle, étant entendu que les copolymères éthylène-acétate de vinyle (EVA) comportant des groupes polaires et ayant une teneur en acétate de vinyle de 60-80 % en poids, les terpolymères oléfiniques comportant des groupes acétate et monoxyde de carbone répartis statistiquement ou le polycaprolactone (PCL) comportant des groupes polaires sont utilisés comme haut-polymère plastifiant comportant des groupes polaires, présentant un poids moléculaire supérieur à 10 000, de préférence supérieur à 30 000, et étant compatible ou formant une phase avec le polychlorure de vinyle, l'invention étant caractérisée en ce que le plastifiant consiste en un mélange du haut-polymère plastifiant avec au moins un ester d'acide polycarboxylique aromatique, de préférence un ester de l'acide trimellitique en un rapport ester d'acide polycarboxylique/haut-polymère plastifiant compris entre 8 : 2 et 0,1 : 10, de préférence entre 3 : 2 et 2 : 3.

2. Films suivant la revendication 1 caractérisée en ce que leur teneur en plastifiant est de 10-40 % en poids, de préférence 15-35 % en poids.

3. Films suivant l'une des revendications 1 et 2 caractérisés en ce que le copolymère de nitrile acrylique consiste en une résine nitrile acrylique-acrylate (NAR).

4. Films suivant l'une des revendications 1 et 2 caractérisés en ce que le film supérieur consiste en un mélange de polychlorure de vinyle (PVC), de copolymère nitrile acrylique-butadiène-styrène (ABS) et/ou de copolymère styrène-nitrile acrylique (SAN), de résine nitrile acrylique-butadiène (NBR) et du plastifiant et en ce que le film inférieur ou les films inférieurs consiste(nt) en polychlorure de vinyle (PVC), en copolymère nitrile acrylique-butadiène-styrène (ABS), en copolymère styrène-nitrile acrylique (SAN), en résine nitrile acrylique-butadiène (NBR) et en plastifiant.

5. Films suivant les revendications 1 à 3 caractérisés en ce que le film supérieur consiste en un mélange de polychlorure de vinyle (PVC), de copolymère nitrile acrylique-butadiène-styrène (ABS) et/ou de copolymère styrène-nitrile acrylique (SAN), de résine nitrile acrylique-acrylate (NAR) et du plastifiant et en ce que le film inférieur ou les films inférieurs consiste(nt) en polychlorure de vinyle (PVC), en copolymère nitrile acrylique-butadiène-styrène (ABS), en copolymère styrène-nitrile acrylique (SAN), en résine nitrile acrylique-acrylate (NAR) et en plastifiant.

6. Films suivant l'une des revendications 1 à 5 caractérisés en ce qu'ils présentent une dureté Shore-D de 20-65, de préférence de 21-40.